# EUROPÄISCHE PATENTSCHRIFT

(11) **EP 1 775 506 B1**
(45) Veröffentlichungstag und Bekanntmachung des Hinweises auf die Patenterteilung: **22.09.2010**
(21) Anmeldenummer: 06021479.8
(22) Anmeldetag: 13.10.2006
(51) Int. Cl.: B32B 1/08, B32B 27/08, B32B 27/32, B32B 27/28, B32B 7/12, F16L 9/12, F24D 3/12, F24F 5/00

(54) **Register**
Register
Registre

(30) Priorität: 13.10.2005 DE 202005016213 U
(43) Veröffentlichungstag der Anmeldung: 18.04.2007
(73) Patentinhaber: Aquatherm Besitzgesellschaft mbH, 57439 Attendorn (DE)
(72) Erfinder: Rosenberg, Gerhard, 57439 Attendorn (DE)
(74) Vertreter: Stoffregen, Hans-Herbert

(56) Entgegenhaltungen:
- EP-A- 0 551 226
- DE-A1- 3 523 574
- DE-A1- 4 411 977

## Beschreibung

Die Erfindung bezieht sich auf ein Register zum Heizen und/oder Kühlen eines Raumes umfassend erste und mit diesen verbundene zweite jeweils aus Kunststoff bestehende Verbundrohre mit einer Diffusions- bzw. Permeationsbarriereschicht gegenüber Sauerstoff, wobei vorzugsweise das erste Verbundrohr einen größeren Querschnitt als das zweite Verbundrohr aufweist.

Aus dem DE-U-81 22 780 ist ein Kunststoffrohr mit kreisrundem oder ovalem Querschnitt bekannt, das für Fußbodenheizungen bestimmt ist. Dabei weist die Außenwandung eine gegenüber Sauerstoffdiffusion dichte flexible Schicht auf, die vorzugsweise als Lackschicht ausgebildet ist. Diese kann über eine Haftvermittlungsschicht mit der Außenwandung verbunden sein.

Ein für den Sanitär- oder Heizungsbereich bestimmtes Kunststoff-Metall-Verbundrohr nach dem DE-U-200 11 499 besteht aus einem Innenrohr und einem Außenrohr aus einem PP-Kunststoffmaterial, zwischen denen eine Metallschicht verläuft, um eine Sauerstoffdichtigkeit zu erzielen.

Gegenstand der DE-T-609 12 418 ist ein Verbundrohr für u. a. Heizleitungssysteme, das aus Polymermaterial besteht und eine gegen Diffusion von Sauerstoff aufweisende Barriereschicht umfasst. Dabei kann die Barriereschicht ein Basisrohr umschließen bzw. von diesem umschlossen sein.

Nach der DE-A-44 11 977 werden Kunststoffrechteckrohre für Fußbodenheizungen verwendet, wobei ein flaches Aufliegen auf einer Bodenfläche erfolgt.

Nach der DE-C-197 25 326 und der DE-B-101 50 987 werden aus Kunststoff bestehende kreisförmige Rohre unterschiedlicher Querschnitte miteinander verbunden.

Verbindungselemente zwischen zusammenzuschweißenden Kunststoffrohrleitungen sind aus der DE-A-196 38 715 bekannt.

Eine Fußbodenheizung nach dem DE-U-299 19 167 weist aus mehreren Lagen bestehende Rohre auf, von denen eine als Diffusionssperrschicht ausgebildet sein kann. Diese Diffusionssperrschicht erstreckt sich dabei zwischen einem Basisrohr und einer Außenbeschichtung aus PE.

Das DE-U-298 24 837 bezieht sich auf ein Mehrschichtkunststoffrohr, das eine EVOH-Sperrschicht umfasst, die über Haftvermittler mit einem Basisrohr verbunden ist. Basisrohr und Sperrschicht und eine diese abdeckende Schutzschicht können durch Extrudieren hergestellt werden.

Ein dem DE-U-296 06 533 zu entnehmendes Mehrschichtkunststoffrohr weist eine EVOH-Schicht als Sauerstoffdiffusionssperre auf.

Ein flexibles Leitungsrohr aus Kunststoff nach dem DE-U-83 32 220 wird für Fußbodenheizungen eingesetzt und weist einen dreilagigen Schichtaufbau auf. Der Außenmantel kann dabei aus PP bestehen. Innere Schichten bestehen aus Polybutylen und einem Aluminiumfolienstreifen, der beidseitig von einer Polyäthylenschicht abgedeckt ist.

Ein gasdiffusionsfestes Rohr im Mehrschichtaufbau nach dem DE-U-81 04 908, das für Zentralheizungsanlagen bestimmt ist, weist ein diffusionsfestes Material wie Polyvinylalkohol auf.

Aus der DE-A-35 23 574 ist eine Fußbodenheizung bekannt, die Heizungsrohre mit trapezförmigem Querschnitt aufweist.

Eine Fußbodenheizung nach der EP-A-0 551 226 weist parallel zueinander verlaufende Rohre auf, die aus einem Polymerwerkstoff oder aus Metall mit einem Polymerüberzug bestehen.

Der vorliegenden Erfindung liegt die Aufgabe zu Grunde, ein Register der eingangs genannten Art aus aus Kunststoff bestehenden ersten und zweiten Rohren zur Verfügung zu stellen, die einen hohen Wärmeübergang bei geringer Trägheit ermöglichen und kostengünstig herstellbar sind. Dabei soll sichergestellt sein, dass in die durch das Register strömende Flüssigkeit Sauerstoff nicht eindringen kann, um insbesondere Korrosionen in Heizungsanlagen zu vermeiden.

Zur Lösung der Aufgabe sieht die Erfindung im Wesentlichen vor, dass das erste und das zweite Verbundrohr jeweils ein extrudiertes Vierkantrohr ist, dass das Vierkantrohr eine aus Polypropylen (PP) bestehende oder dieses enthaltende Außenschicht und eine aus Polypropylen (PP) bestehende oder dieses enthaltende Innenschicht aufweist, zwischen denen die aus Kunststoff bestehende oder Kunststoff enthaltende Barriereschicht verläuft, und dass zum Verbinden des zweiten Verbundrohrs mit dem ersten Verbundrohr das zweite Verbundrohr endseitig verrundet ist und in in den ersten Verbundrohren ausgebildeten Löchern eingesteckt und verschweißt ist oder das zweite Verbundrohr in seinem mit dem ersten Verbundrohr verbundenen Ende von einer Hülse umgeben ist, die außenseitig eine Konusform mit größerem Außenquerschnitt im Verbindungsbereich mit dem ersten Verbundrohr aufweist.

Erfindungsgemäß werden für ein Heiz- bzw. Kühlregister extrudierte Vierkantrohre benutzt, die eine Zwischenschicht aufweisen, die eine Sauerstoff-Diffusionsbarriere bildet. Die Barriereschicht besteht dabei vorzugsweise aus Ethylenvinylalkohol (EVAL). Unabhängig hiervon sollte die Permeationsbarriereschicht über Haftvermittlerschichten sowohl mit der Außen- als auch mit der Innenschicht verbunden werden, die aus PP, vorzugsweise aus PP-Random-Copolymerisat bestehen. Dadurch, dass die Rohre des Heizregisters als Vierkantrohre ausgebildet sind, ergibt sich der Vorteil, dass die Rohre jeweils mit einer Außenseite flächig bzw. weitgehend flächig z. B. auf einer Wandplatte oder Bodenplatte oder einer Verkleidung aufliegen können, so dass ein guter Wärmeübergang sichergestellt ist. Folglich ist eine geringe Trägheit sowohl beim Heizen als auch beim Kühlen gegeben.

Insbesondere sieht die Erfindung vor, dass die ersten und zweiten Verbundrohre derart miteinander verbunden sind, dass die ersten und zweiten Verbundrohre mit jeweils einer ihrer Außenflächen eine Auflagefläche für das Register bilden. Die Erfindung wird jedoch nicht verlassene, wenn im Übergangsbereich zwischen erstem und zweitem Bereich ein gewisser Versatz vorliegt; denn in diesem Fall würden nur in geringem Abstand zu dem als Verteilerrohr bezeichneten ersten Verbundrohr die zweiten auch als Wärmetauschrohre zu bezeichnenden Verbundrohre flächig auf einer Kontaktfläche aufliegen.

Durch die Vierkantgeometrie ergibt sich auch eine hohe Stabilität der Rohre.

Insbesondere ist vorgesehen, dass die ersten Vierkantrohre eine Rechteckgeometrie und die zweiten Vierkantrohre einen Querschnitt eines Quadrates aufweisen:

Die ersten Verbundrohre und die zweiten Verbundrohre sind insbesondere durch Schweißen miteinander verbunden. Hierzu werden zuvor in die ersten Rohre Öffnungen eingebracht, um sodann die zweiten Rohre die Öffnungen umgebend auf Stoß mit den ersten Verbundrohren zu verschweißen.

Um auch bei geringerer Wandstärke der zweiten Rohre eine sichere Verbindung sicherzustellen, sieht eine Alternative vor, dass die zweiten Verbundrohre in ihren Enden jeweils von einer Hülse umgeben sind, die im Bereich der freien Enden der zweiten Verbundrohre einen größeren Außenquerschnitt als im Abstand hierzu aufweisen. Mit anderen Worten weisen die Hülsen eine Konusform auf

Folglich steht im Schweißbereich hinreichend Material zur Verfügung, um die zweiten Verbundrohre mit den ersten Verbundrohren verschweißen zu können. Gleichzeitig wird im Abstand zum Schweißbereich der Querschnitt der zweiten Verbundrohre nicht unmerklich vergrößert, so dass Einbußen bezüglich des Wärmeübergangs dem Grunde nach nicht auftreten können.

Die aus PP bestehende Innenschicht der Verbundrohre sollte eine Dicke Di und die Außenschicht eine Dicke Da aufweisen, wobei Da> Di sein sollte. Bevorzugterweise beträgt Da in etwa 2 Di.

Die Barriereschicht sollte erheblich dünner als die äußere und die innere Schicht sein, wobei eine Schichtdicke von vorzugsweise zwischen 0,10 und 0,15 mm unabhängig von der Gesamtwandstärke der Verbundrohre anzugeben ist.

Die die Barriereschicht innen- und außenseitig begrenzenden Haftvermittler- wie Kleberschichten sollten eine Dicke im Bereich zwischen 0,08 und 0,12 mm aufweisen.

Insbesondere ist vorgesehen, dass eine Heiz- und/oder Kühlanordnung ein erfindungsgemäßes Register umfasst, wobei die ersten und die zweiten Verbundrohre mit ihren die Auflagefläche bildenden Außenseitenflächen eine Begrenzung wie Deckenwand oder Bodenplatte eines Raums oder Verkleidung eines solchen kontaktiert. Insbesondere sieht die Erfindung vor, dass das Register in einen Hohlraum eines Bodens aufgeständert flächig an der Unterseite der Bodenplatte anliegt.

Wird das Register als Deckenheizung- bzw. -kühlung verwendet, so sollte das Register auf einer Deckenplatte einer Zwischendecke aufliegen.

Auch besteht die Möglichkeit, dass das Register z. B. in einer Wandung eines Raums unter Putz angeordnet ist.

Weitere Einzelheiten, Vorteile und Merkmale der Erfindung ergeben sich nicht nur aus den Ansprüchen, den diesen zu entnehmenden Merkmalen - für sich und/oder in Kombination, sondern auch aus der nachfolgenden Beschreibung von der Zeichnung zu entnehmenden bevorzugten Ausführungsbeispielen.

Es zeigen:
- Fig. 1: eine Prinzipdarstellung eines Registers,
- Fig. 2: einen Schnitt durch ein erstes Verbundrohr,
- Fig. 3: einen Schnitt durch ein zweites Verbundrohr,
- Fig. 4: einen Ausschnitt einer Decke,
- Fig. 5: einen Schnitt entlang der Linie V-V in Fig. 1,
- Fig. 6: eine Draufsicht auf eine weitere Ausführungsform eines Registers,
- Fig. 7: eine Seitenansicht des Registers gemäß Fig. 6,
- Fig. 8: ein Schnitt entlang der Linie BB in Fig. 6 und
- Fig. 9: ein Detail "C" der Fig. 8.

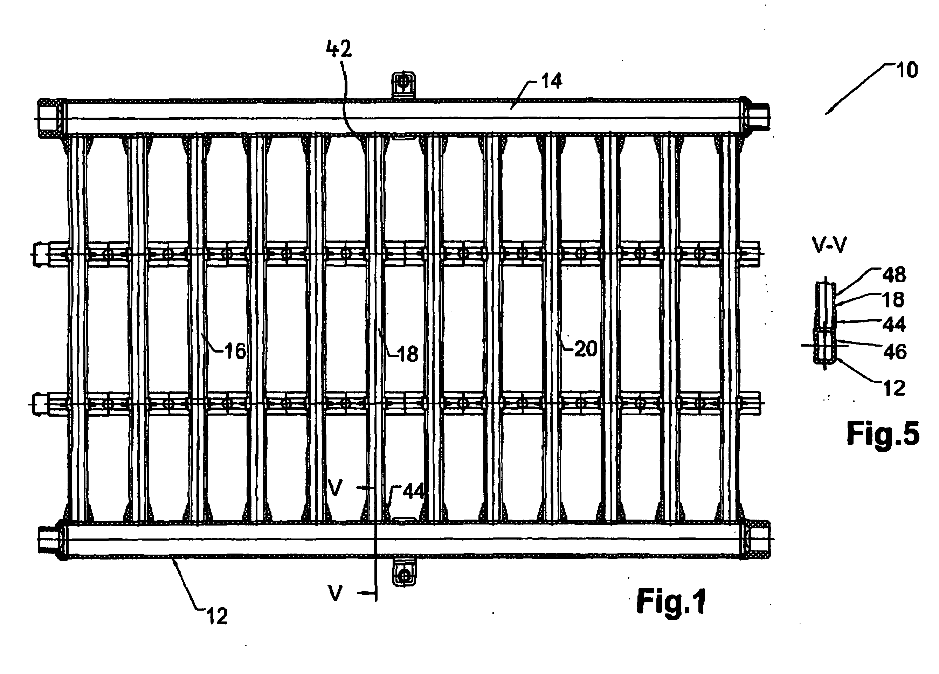

Den Fig. sind unterschiedliche Formen von Heizregistern 10, 56 zu entnehmen, die von der Grundkonzeption eine gleiche Konstruktion aufweisen, so dass für gleiche Elemente gleiche Bezugszeichen verwendet werden. So ist der Fig. 1 eine Draufsicht des Heizregisters 10 zu entnehmen, das aus ersten Verbundrohren 12, 14, die auch als Verteilerrohre zu bezeichnen sind, und aus zweiten Verbundrohren besteht, von denen beispielhaft einige mit den Bezugszeichen 16, 18, 20 gekennzeichnet sind. Die zweiten Rohre 16, 18, 20 sind auch als Wärmetauscherrohre zu bezeichnen.

Von den zweiten Verbundrohren 16, 18, 20 gehen im Ausführungsbeispiel des Weiteren nicht näher bezeichnete Halte- bzw. Befestigungsschienen aus, über die das Register 10 montiert werden kann.

Das entsprechende Register 10 dient zur Heizung bzw. Kühlung von Räumen und wird hierzu von einem entsprechend temperierten Fluid durchströmt. Hierzu gehen von den ersten Verbundrohren 12, 14 Anschlüsse oder Stutzen aus, die über Steckverbindungen mit einem Kühl- bzw. Heizkreislauf verbunden werden. Die Stutzen verlaufen zur von dem Register 10 aufgespannten Ebene um 90° abgewinkelt.

Die zweiten Verbundrohre 16, 18, 20 verlaufen senkrecht zu den ersten Verbundrohren 12, 14 und sind mit diesen verschweißt. Dies wird dadurch ermöglicht, dass die ersten und zweiten Verbundrohre 12, 14, 16, 18, 20 Polypropylen-Material, insbesondere Polypropylen-Random-Copolymerisat enthalten, vorzugsweise mit einem Gewichtsanteil von 50 bis 90 Gew.-%., das einen Ethen-Gehalt von 2 bis 6 Gew.-% und einen MFR-Wert von 0,3 - 10,0 g/10min bei einer Prüftemperatur von 190 °C und 5 kg Belastungsgewicht aufweist.

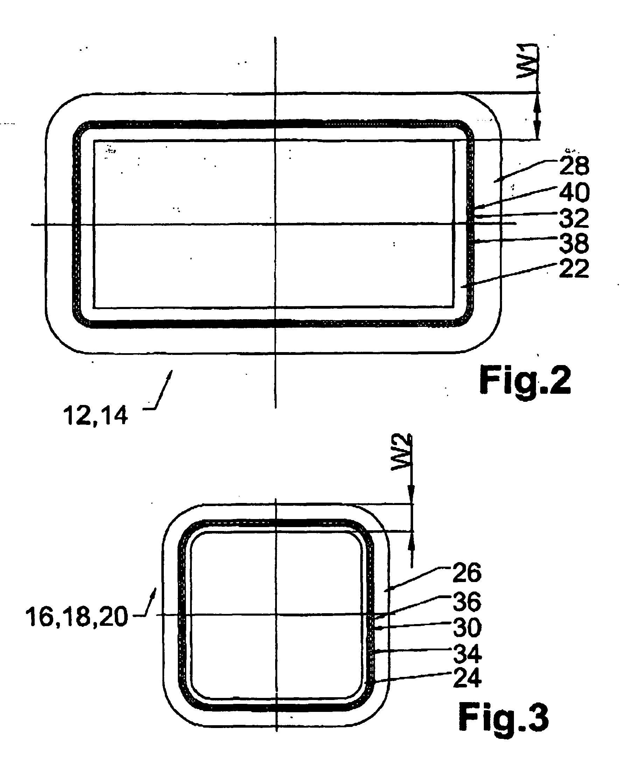

Das erste und zweite Verbundrohr 12, 14, 16, 18, 20 ist als Mehrschichtrohr ausgebildet, wie dies anhand der Fig. 2 und 3 näher erläutert wird. Den Fig. 2 und 3 ist auch zu entnehmen, dass es sich bei den ersten und zweiten Verbundrohren 12, 14, 16, 18, 20 um Vierkantrohre handelt, wobei die ersten Verbundrohre 12, 14 ein Rechteckprofil mit unterschiedlichen Schenkellängen und die zweiten Verbundrohre 16, 18, 20 ein Rechteckprofil mit gleichen Schenkellängen, also im Schnitt ein Quadrat zeigen.

Jedes Verbundrohr 12, 14, 16, 18, 20 ist im Ausführungsbeispiel als Fünfschichtrohr ausgebildet, dessen innere Schicht 22, 24 und äußere Schicht 26, 28 aus Polypropylen-Material wie PP-R besteht bzw, dieses enthält. Dabei sind die Dicken der Innen- und Außenschichten derart zueinander abgestimmt, dass die Innenschicht 22, 24 eine Dicke Di und die Außenschicht 26, 28 eine Dicke Da mit Da > Di, insbesondere Da in etwa 2 Di beträgt.

Zwischen der Innen- und Außenschicht 24, 26 bzw. 22, 28 verläuft erfindungsgemäß eine Sauerstoff nicht hindurch lassende Diffusions- oder Permeationsbarriereschicht 30, 32, die insbesondere aus Ethylenvinylalkoholcopolymer (EVOH) besteht bzw, dieses enthält. Zwischen der Permeationsbarriereschicht 30, 32 und der Innen- bzw. Außenschicht 22, 24 bzw. 26, 28 verlaufen Haftvermittlerschichten 34, 36 bzw. 38, 40 in Form von Adhesive-Copolymer-Resin wie z. B. unter der Bezeichnung Plexar Px 6006 oder Plexar Px 5335 angebotene Haftvermittler.

Unabhängig von dem Querschnitt bzw. der Wandstärke des jeweiligen Rohrs 12, 14 bzw. 16, 18, 20 sollte die Barriereschicht 30, 32 eine Dicke zwischen 0,1 mm und 0,14 mm, insbesondere 0,12 mm und die Haftvermittlerschicht 34, 36, 38, 40 eine Dicke von in etwa 0,09 mm bis 0,11 mm, vorzugsweise von 0,1 mm aufweisen.

Bevorzugterweise weist das erste Verbundrohr 12, 14, also das Verteilerrohr eine Wandstärke W₁ von in etwa 2,3 bis 2,7 mm, insbesondere von 2,5 mm, und das zweite Verbundrohr 16, 18, 20, d. h. das Wärmetauscherrohr eine Wandstärke W₂ von in etwa 1,4 bis 1,6 mm, insbesondere von 1,5 mm auf.

Insbesondere weist ein Schenkel des ersten Verbundrohrs 12, 14 eine Außenlänge von in etwa 24 mm und der kürzere Schenkel eine Länge von in etwa 14 mm auf. Die zweiten Verbundrohre 16, 18, 20 können eine Außenschenkellänge von vorzugsweise 11 bis 13 mm, insbesondere von 12 mm aufweisen.

Um ungeachtet der geringen Wandstärken die zweiten Verbundrohre 16, 18, 20 mit den ersten Verbundrohren 12, 14 verschweißen zu können, ohne dass die Gefahr von Leckagen besteht, ist nach einer erfindungsgemäßen Alternation vorgesehen, dass die zweiten Verbundrohre 16, 18, 20 in ihren zu verschweißenden Enden von Hülsen 42, 44 umgeben sind, die im Endbereich eine größere Wandstärke als beabstandet zum Ende aufweisen, also eine Konusgeometrie zeigen, wie sich aus der Fig. 1 ergibt. Hierdurch ist sichergestellt, dass im erforderlichen Umfang Material zur Verfügung steht, um die zweiten Verbundrohre 16, 18, 20 mit den ersten Verbundrohren 12, 14 verschweißen zu können, Durch die Konusform ist ferner der Vorteil gegeben, dass eine hinreichende stoffschlüssige Verbindung zwischen den Hülsen 42, 44 und den zweiten Verbundrohren 16, 18, 20 ermöglicht wird, ohne dass eine unerwünschte Wanddickenverstärkung in den Endbereichen erfolgt, wodurch der Wärmeübergang beeinflusst werden könnte.

Vor dem Verschweißen werden in den ersten Verbundrohren Löcher eingebracht, deren jeweiliger Querschnitt dem Querschnitt der anzuschweißenden zweiten Verbundrohre 16, 18, 20 entspricht.

Des Weiteren ist erfindungsgemäß vorgesehen, dass die zweiten Verbundrohre 16, 18, 20 mit den ersten Verbundrohren 12, 14 derart verschweißt sind, dass entsprechend der Fig. 5 (Schnitt entlang der Linie VV in Fig. 1) eine Außenfläche 46 der ersten Verbundrohre 12, 14 in einer Ebene verläuft, in der die zweiten Verbundrohre 16, 18, 20 ebenfalls mit jeweils einer Außenfläche 48 in erheblichem Umfang verlaufen, so dass infolgedessen die entsprechenden Außenflächen 46, 48 eine Auflagefläche des Registers 10 bilden. Einzig und allein im Schweißbereich, also im Bereich der Hülsen 42, 44 verlaufen die zweiten Verbundrohre 16, 18, 20 beabstandet zu der von den Außenflächen 46 der ersten Verbundrohre 12, 14 aufgespannten Ebene. Da jedoch die zweiten Verbundrohre 16, 18, 20 aus Kunststoff bestehen, können sich diese im Abstand zu den Hülsen 42, 44 im erforderlichen Umfang auf eine Auflagefläche durchbiegen, um das gewünschte flächige Auflegen der Außenfläche 48 zu ermöglichen. Hierdurch ist ein guter Wärmeübergang zu einer Abstütz- bzw, Auflagefläche gegeben.

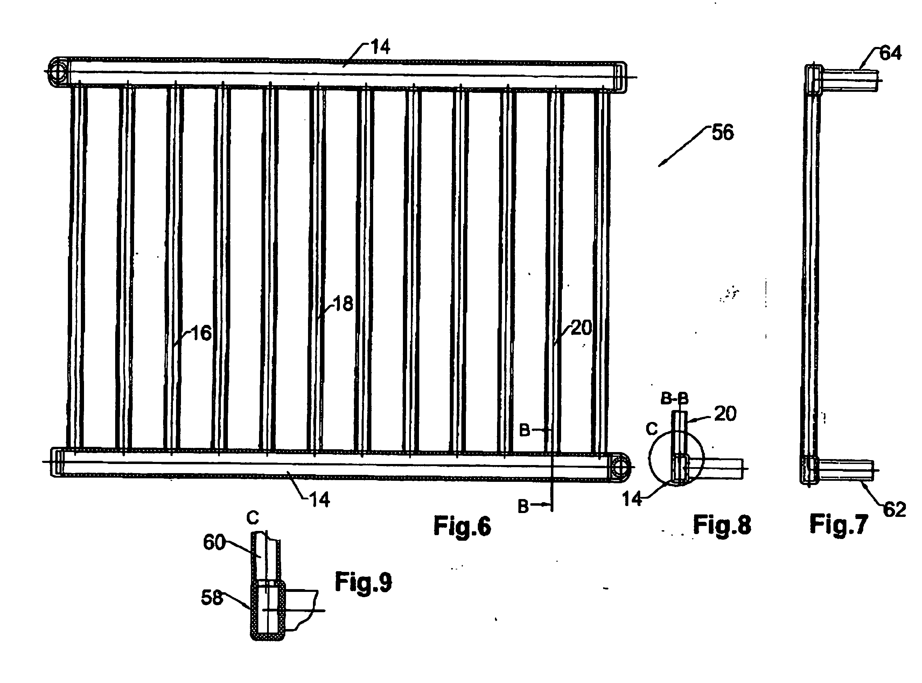

Eine alternative Ausführungsform zu dem der Fig. 1 zu entnehmenden Register zeigt die Fig. 6 insoweit, als dass die zweiten Verbundrohre 16, 18, 20 endseitig nicht von einer konusförmigen Hülse umgeben sind, sondern endseitig verrundet worden sind, also eine Kreisringgeometrie aufweisen. Ferner sind die zweiten oder Wärmetauscherrohre 16, 18, 20 zu ihren Enden hin geringfügig konisch ausgebildet, um in entsprechende Rundlöcher der ersten oder Verteilerrohre 12, 14 eingesetzt und sodann verschweißt zu werden.

Durch die diesbezügliche Verbindungsart ist eine stoffschlüssige und dichte Verbindung zwischen den ersten und zweiten Rohren 12, 14 bzw. 16, 18, 20 sichergestellt, ohne dass es zusätzlicher Hülsen oder sonstiger Elemente bedarf, um die gewünschte flüssigkeitsdichte Verbindung zwischen den Rohren 12, 14, 16, 18, 20 herzustellen. Gleichzeitig ergibt sich der Vorteil, dass die ersten und zweiten Rohre 12, 14, 16, 18, 20 fluchtend mit zumindest eine der entlang der von dem Register 56 aufgespannten Ebene verlaufenden Außenflächen 58, 60 ineinander übergehen, so dass ein flächiges Aufliegen auf einer Ebene wie Deckenplatte möglich ist.

Aus den Fig. 6 bis 9 ergibt sich des Weiteren, dass die Anschlüsse bzw. Anschlussstutzen sich senkrecht zu der von dem Register 10 bzw. 56 aufgespannten Ebene erstrecken. Die entsprechenden Anschlüsse sind beispielhaft mit den Bezugszeichen 62, 64 gekennzeichnet.

Durch die Vierkantgeometrie der ersten und zweiten Verbundrohre 12, 14, 16, 18, 20 ist nicht nur eine hohe Stabilität sichergestellt, sondern erwähntermaßen :ein guter Wärmeübergang zu einer Auflagefläche bzw. zur Umgebung mit der Folge gegeben, dass das entsprechende Register bezüglich des Wärmeübergangs eine geringe Trägheit aufweist.

Es bietet sich eine größtmögliche Auflage- also Kontaktfläche, ein Vorteil, den Register, bei denen die Wärmetauscherrohre aus Rundprofilen bestehen, nicht bieten. Auch wird die Abstrahlungsfläche in Bezug auf den zu temperierenden Raum im Vergleich zu einem Rundrohr von 180° auf 270° vergrößert.

Sofern das Register 10, 56 nicht auf einer Auflagefläche wie Deckenplatte aufliegt bzw. flächig auf der Unterseite einer Bodenplatte anliegt, ist aufgrund der hohen mechanischen Stabilität eine einfache Montage bzw. ein problemloses Einputzen möglich.

Durch die Rechteckgeometrie der ersten und zweiten Verbundrohre 12, 14, 16, 18, 20 ergibt sich des Weiteren der Vorteil einer geringen Aufbauhöhe.

Des Weiteren haben Wärmemessungen ergeben, dass ein erfindungsgemäßes Register 10, 56, bei dem sämtliche Rohre als Vierkantprofile ausgebildet sind, bei einem Einsatz z. B. als Kühlmittel ein Wärmeprofil zeigen, das dem von herkömmlichen Kühlmatten entspricht, die Kapillarrohre mit extrem kleinem Durchmesser (z. B. 3,5 x 0,5 mm) aufweisen. Entsprechende Kühlmatten zeigen eine gute Kühlleistung, sind jedoch mit dem Nachteil behaftet, dass eine aufwendige Montage und eine hohe Empfindlichkeit gegen Beschädigungen gegeben sind. Auch sind entsprechende Kühlmatten nicht sauerstoffdicht.

Demgegenüber zeigen Register mit Rundrohren als Wärmetauscherrohre eine erheblich geringere Kühlung und somit Wärmeübergang.

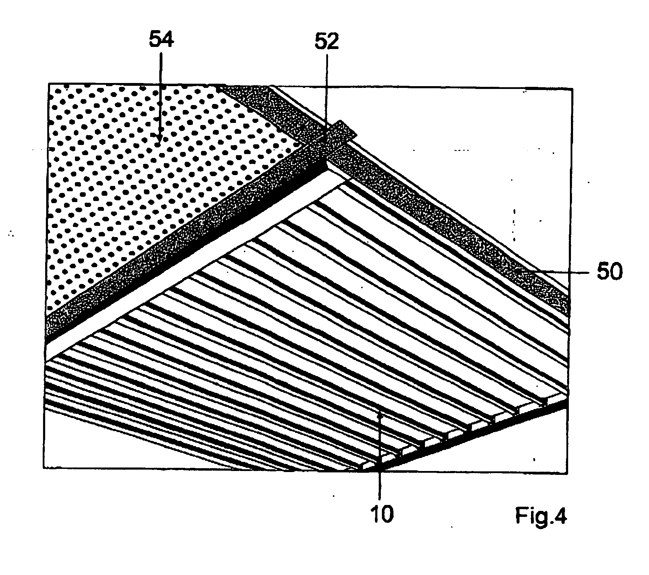

Ein möglicher Einsatzbereich des erfindungsgemäßen Registers 10, 56 ist der Fig. 4 zu entnehmen. Diese zeigt einen Ausschnitt einer abgehängten Deckenverkleidung, die Profile mit Auflagenflächen 50, 52 für Deckenverkleidungen 54 umfasst. Diese sind im Ausführungsbeispiel als Lochplatten ausgebildet. Auf entsprechenden Lochplatten 54 werden sodann erfindungsgemäße Heizregister 10, 56 flächig aufgelegt, um einen von der abgehängten Decke begrenzten Raum in gewünschtem Umfang zu temperieren. In der Fig. 4 ist die Deckenverkleidung im Bereich des Registers 10, 56 entfernt.

## Patentansprüche

1. Register (10, 56) zum Heizen und/oder Kühlen eines Raumes umfassend erste und mit diesen verbundene zweite jeweils aus Kunststoff bestehende Verbundrohre (12, 14, 16, 18, 20) mit einer Diffusions- bzw. Permeationsbarriereschicht (30, 32) gegenüber Sauerstoff,
**dadurch gekennzeichnet,**
**dass** das erste und das zweite Verbundrohr (12, 14, 16, 18, 20) jeweils ein extrudiertes Vierkantrohr ist, dass das Vierkantrohr eine aus Polypropylen bestehende oder dieses enthaltende Außenschicht (26, 28) und eine aus Polypropylen bestehende oder dieses enthaltende Innenschicht (22, 24) aufweist, zwischen denen die aus Kunststoff bestehende oder Kunststoff enthaltende Barriereschicht (30, 32) verläuft,
und **dass** zum Verbinden des zweiten Verbundrohrs mit dem ersten Verbundrohr das zweite Verbundrohr endseitig verrundet ist und in in den ersten Verbundrohren (12, 14) ausgebildeten Löchern eingesteckt und verschweißt ist oder das zweite Verbundrohr in seinem mit dem ersten Verbundrohr verbundenen Ende von einer Hülse (42, 44) umgeben ist, die außenseitig eine Konusform mit größerem Außenquerschnitt im Verbindungsbereich mit dem ersten Verbundrohr aufweist.

2. Register nach Anspruch 1,
**dadurch gekennzeichnet,**
**dass** das Vierkantrohr (12, 14, 16, 18, 20) Polypropylen-Random-Copolymerisat zwischen enthält und mit einem Gewichtsanteil von 50 bis 90 Gew.-% enthält, das einen Ethen-Gehalt von 2-6 Gew.-% und einen MFR-Wert von 0,3 bis 10,0 g/10min bei einer Prüftemperatur von 190 °C und 5 kg Belastungsgewicht aufweist.

3. Register nach Anspruch 1 oder 2,
**dadurch gekennzeichnet,**
**dass** die Barriereschicht (30, 32) aus Ethylenvinylalkohol besteht oder dieses enthält.

4. Register nach zumindest einem der Ansprüche 1 bis 3,
**dadurch gekennzeichnet,**
**dass** die ersten und zweiten Verbundrohre (12, 14, 16, 18, 20) derart miteinander verbunden sind, dass die ersten und zweiten Verbundrohre mit jeweils einer ihrer Außenflächen (46, 48) eine Auflagefläche für das Register (10) bilden.

5. Register nach zumindest einem der vorhergehenden Ansprüche,
**dadurch gekennzeichnet,**
**dass** das erste Verbundrohr (12, 14) eine Rechteckgeometrie mit unterschiedlichen Schenkellängen und/oder dass das zweite Verbundrohr (16, 18, 20) eine Rechteckgeometrie mit quadratischem Querschnitt aufweisen.

6. Register nach zumindest einem der vorhergehenden Ansprüche,
**dadurch gekennzeichnet,**
**dass** die das zweite Verbundrohr (16, 18, 20) umgebende Hülse (42, 44) mit dem ersten Verbundrohr (12, 14) stoffschlüssig verbunden wie verschweißt ist.

7. Register nach zumindest einem der vorhergehenden Ansprüche,
**dadurch gekennzeichnet,**
**dass** das erste Verbundrohr (12, 14) einen größeren Querschnitt als das zweite Verbundrohr (16, 18, 20) aufweist.

8. Register nach zumindest einem der vorhergehenden Ansprüche,
**dadurch gekennzeichnet,**
**dass** die Innenschicht (22, 24) eine Dicke Di und die Außenschicht (26, 28) eine Dicke Da aufweist, wobei Da > Di, insbesondere Da ≈ 2 Di ist.

9. Register nach Anspruch 3,
**dadurch gekennzeichnet,**
**dass** die Barriereschicht (30, 32) mit der Innenschicht (22, 24) und/oder der Außenschicht (26, 28) über eine Haftvermittlerschicht (34, 36, 38, 40) verbunden ist.

10. Register nach Anspruch 4,
**dadurch gekennzeichnet,**
**dass** zumindest eine der parallel zur von dem Register (10, 56) aufgespannten Ebene verlaufenden Außenflächen (58) des ersten Verbundrohrs (12, 14) fluchtend oder weitgehend fluchtend in eine der parallel zu der Ebene verlaufenden Außenflächen (60) des zweiten Verbundrohrs (16, 18, 20) übergeht.

11. Heiz- und/oder Kühlanordnung umfassend ein Register nach zumindest Anspruch 1,
**dadurch gekennzeichnet,**
**dass** die ersten und zweiten Verbundrohre (12, 14, 16, 18, 20) mit ihren die Auflagefläche bildenden Außenseiten (46, 48) flächig oder weitgehend flächig eine Begrenzung wie Decken- und/oder Bodenplatte eines Raums oder Verkleidung eines solchen kontaktieren.

12. Heiz- und/oder Kühlanordnung nach Anspruch 11,
**dadurch gekennzeichnet,**
**dass** das Register (10) in einem Hohlraum eines Bodens aufgeständert ist und unterseitig eine Bodenplatte flächig berührt.

13. Heiz- und/oder Kühlanordnung nach Anspruch 11,
**dadurch gekennzeichnet,**
**dass** das Register (10) auf einer Deckenplatte (54) einer Zwischendecke aufliegt.

14. Heiz- und/oder Kühlanordnung nach Anspruch 11,
**dadurch gekennzeichnet,**
**dass** das Register (10) in einer Wandung des Raums unter Putz angeordnet ist.

## Claims

1. Register (10, 56) for heating and/or cooling of a room, comprising first composite tubes and second composite tubes (12, 14, 16, 18, 20) connected thereto, in each case made of plastic and having a diffusion or permeation barrier layer (30, 32) against oxygen,
**wherein**
the first and the second composite tubes (12, 14, 16, 18, 20) are in each case an extruded square tube, wherein the square tube has an outer layer (26, 28) comprising or containing polypropylene and an inner layer (22, 24) comprising or containing polypropylene, between which layers runs the barrier layer (30, 32) comprising or containing plastic, and wherein for connecting the second composite tube to the first composite tube the second composite tube is rounded at the end and is inserted and fused into the holes provided in the first composite tubes (12, 14), or the second composite tube is surrounded at that end connected to the first composite tube by a sleeve (42, 44) having on its outside a conical form with a larger outer cross-section in the connection area to the first composite tube.

2. Register according to Claim 1,
**wherein**
the composite tube (12, 14, 16, 18, 20) contains polypropylene random copolymerisate with a percentage by weight of 50 to 90 that has an ethene content of 2 - 6 % by wt. and an MFR value from 0.3 to 10.0 g/10 min. at a test temperature of 190°C and at a loading weight of 5 kg.

3. Register according to Claim 1 or 2,
**wherein**
the barrier layer (30, 32) comprises or contains ethylene vinyl alchohol.

4. Register according to at least one of Claims 1 to 3,
**wherein**
the first and second composite tubes (12, 14, 16, 18, 20) are connected to one another such that the first and second composite tubes form with one each of their outer surfaces (46, 48) a contact surface for the register (10).

5. Register according to at least one of the preceding claims,
**wherein**
the first composite tube (12, 14) has a rectangular geometry with differing side lengths and/or the second composite tube (16, 18, 20) has a rectangular geometry with square cross-section.

6. Register according to at least one of the preceding claims,
**wherein**
the sleeve (42, 44) surrounding the second composite tube (16, 18, 20) is connected to the first composite tube (12, 14) in a material connection, for example fused.

7. Register according to at least one of the preceding claims,
**wherein**
the first composite tube (12, 14) has a larger cross-section than the second composite tube (16, 18, 20).

8. Register according to at least one of the preceding claims,
**wherein**
the inner layer (22, 24) has a thickness Di and the outer layer (26, 28) a thickness Da, where Da > Di, in particular Da ≈ 2 Di.

9. Register according to Claim 3,
**wherein**
the barrier layer (30, 32) is connected to the inner layer (22, 24) and/or to the outer layer (26, 28) by a bonding agent layer (34, 36, 38, 40).

10. Register according to Claim 4,
**wherein**
at least one of the outer surfaces (58) of the first composite tube (12, 14) running parallel to the plane generated by the register (10, 56) merges flush or largely flush into one of the outer surfaces (60) of the second composite tube (16, 18, 20) running parallel to the plane.

11. Heating and/or cooling arrangement comprising a register according to at least Claim 1,
**wherein**
the first and second composite tubes (12, 14, 16, 18, 20) are in flat or largely flat contact with a limitation such as a top and/or bottom plate of a room or a cladding thereof by their outer sides (46, 48) forming the contact surface.

12. Heating and/or cooling arrangement according to Claim 11,
**wherein**
the register (10) is mounted on a stand in a cavity of a floor and is in flat contact with the bottom plate on the underside.

13. Heating and/or cooling arrangement according to Claim 11,
**wherein**
the register (10) rests on a top plate (54) of an intermediate floor.

14. Heating and/or cooling arrangement according to Claim 11,
**wherein**
the register (10) is is arranged flush-mounted in a wall of the room.

## Revendications

1. Panneau tubulaire (10, 56) pour chauffer et/ou refroidir un local, comprenant des premiers et des seconds tubes d'assemblages (12, 14, 16, 18, 20), les seconds étant reliés aux premiers, et respectivement constitués de matière synthétique avec une couche faisant barrière antidiffusion ou antiperméation (30, 32) contre l'oxygène,
**caractérisé en ce**
**que** le premier ainsi que le second tube d'assemblage (12, 14, 16, 18, 20) est un tube extrudé à section rectangulaire, que le tube à section rectangulaire présente une couche extérieure (26, 28) constituée de polypropylène ou en contenant, et une couche intérieure (22, 24) constituée de polypropylène ou en contenant, entre lesquelles s'étend la couche faisant barrière (30, 32) constituée de matière synthétique ou contenant de la matière synthétique, et que pour relier le second tube d'assemblage au premier tube d'assemblage, le second tube d'assemblage est arrondi à son extrémité et introduit et soudé dans des orifices formés dans les premiers tubes d'assemblage (12, 14), ou le second tube d'assemblage est entouré à son extrémité reliée au premier tube d'assemblage par un manchon (42, 44) présentant du côté extérieur une forme conique avec la grande section transversale extérieure dans la zone de liaison avec le premier tube d'assemblage.

2. Panneau tubulaire selon la revendication 1,
**caractérisé en ce**
**que** le tube à section rectangulaire (12, 14, 16, 18, 20) contient du polypropylène copolymère aléatoire avec une part en poids de 50 à 90 % en poids, qui présente une teneur en éthylène de 2 à 6 % en poids et une valeur MFR de 0,3 à 10,0 g/10 min sous une température d'essai de 190 °C et une charge de 5 kg.

3. Panneau tubulaire selon la revendication 1 ou 2,
**caractérisé en ce**
**que** la couche faisant barrière (30, 32) est constituée d'éthylène-vinyle-alcool ou en contient.

4. Panneau tubulaire selon au moins l'une des revendications 1 à 3,
**caractérisé en ce**
**que** le premier et le second tubes d'assemblage (12, 14, 16, 18, 20) sont reliés entre eux de manière telle que le premier et le second tubes d'assemblage forment une surface d'appui pour le panneau tubulaire (10) avec respectivement l'une de leurs faces extérieures (46, 48).

5. Panneau tubulaire selon au moins l'une des revendications précédentes,
**caractérisé en ce**
**que** le premier tube d'assemblage (12, 14) présente une géométrie rectangulaire avec des côtés de longueurs différentes et/ou que le second tube d'assemblage (16, 18, 20) présente une géométrie rectangulaires avec une section transversale carrée.

6. Panneau tubulaire selon au moins l'une des revendications précédentes,
**caractérisé en ce**
**que** le manchon (42, 44) entourant le second tube d'assemblage (16, 18, 20) est relié au premier tube d'assemblage (12, 14) par de la matière, par exemple soudé.

7. Panneau tubulaire selon au moins l'une des revendications précédentes,
**caractérisé en ce**
**que** le premier tube d'assemblage (12, 14) présente une section transversale plus grande que celle du second tube d'assemblage (16, 18, 20).

8. Panneau tubulaire selon au moins l'une des revendications précédentes,
**caractérisé en ce**
**que** la couche intérieure (22, 24) présente une épaisseur Di et la couche extérieure (26, 28) une épaisseur Da telles que Da > Di, en particulier Da ≈ Di.

9. Panneau tubulaire selon la revendication 3,
**caractérisé en ce**
**que** la couche faisant barrière (30, 32) est reliée à la couche intérieure (22, 24) et/ou à la couche extérieure (26, 28) par une couche d'agent adhésif (34, 36, 38, 40).

10. Panneau tubulaire selon la revendication 4,
**caractérisé en ce**
**qu'**au moins une des faces extérieures (58) du premier tube d'assemblage (12, 14) s'étendant parallèlement au plan décrit par le panneau tubulaire (10, 56) se fond en s'alignant ou en s'alignant largement en une des faces extérieures (60) du second tube d'assemblage (16, 18, 20) s'étendant parallèlement au plan.

11. Dispositif de chauffage et/ou de refroidissement comprenant un panneau tubulaire selon au moins le revendication 1,
**caractérisé en ce**
**qu'**avec leurs faces extérieures (46, 48) formant la surface d'appui, le premier et le second tube d'assemblage (12, 14, 16, 18, 20) entrent contact surfaciquement ou largement surfaciquement avec une délimitation d'un local, telle qu'une plaque de plafond ou de plancher ou un revêtement de celle-ci.

12. Dispositif de chauffage et/ou de refroidissement selon la revendication 11,
**caractérisé en ce**
**que** le panneau tubulaire (10) est dressé dans une cavité d'un plancher et que sa face inférieure entre en contact surfaciquement avec une plaque de plancher.

13. Dispositif de chauffage et/ou de refroidissement selon la revendication 11,
**caractérisé en ce**
**que** le panneau tubulaire (10) repose sur une plaque (54) d'un plafond intermédiaire.

14. Dispositif de chauffage et/ou de refroidissement selon la revendication 11,
**caractérisé en ce**
**que** le panneau tubulaire (10) est encastré dans une paroi du local.
